# FASCICULE DE BREVET EUROPEEN

(11) **EP 0 810 783 B1**
(45) Date de publication et mention de la délivrance du brevet: **29.08.2001**
(21) Numéro de dépôt: 97410058.8
(22) Date de dépôt: 28.05.1997
(51) Int. Cl.: H04N 5/44, H04N 7/52, H04N 5/445

(54) **Système de conversion de signaux de télévision numériques avec insertion de menus interactifs**
System zur Umwandlung von digitalen Fernsehsignalen mit einer Einblendung von interaktiven Menüs
System for the conversion of digital television signals with an insertion of interactive menu

(30) Priorité: 29.05.1996 FR 9606829
(43) Date de publication de la demande: 03.12.1997
(73) Titulaire: STMicroelectronics S.A., 94250 Gentilly (FR)
(72) Inventeur: Douche, Jean-Louis, 38610 Gieres (FR); Artieri, Alain, 38240 Meylan (FR); Imbert, Michel, Coublevie, 38500 Voiron (FR)
(74) Mandataire: de Beaumont, Michel

(56) Documents cités:
- EP-A- 0 596 732
- WO-A-93/11641
- WO-A-94/17633
- WO-A-95/33338
- WO-A-95/35626

## Description

La présente invention concerne la réception de signaux de télévision numériques provenant, par exemple, d'un réseau câblé ou d'un satellite. De tels signaux de télévision nécessitent un système de conversion pour adapter les signaux numériques aux entrées analogiques normalisées d'un poste de télévision. Les entrées analogiques d'un poste de télévision sont constituées, soit de signaux donnant l'intensité de chaque couleur de base (RVB), soit d'un signal vidéo composite (CVBS), soit de signaux de luminance Y et de chrominance C séparés qui constituent également les signaux utilisés pour certains magnétoscopes, en particulier les magnétoscopes S-VHS.

Les signaux de télévision numériques sont généralement codés, côté émission, selon un processus de compression de données pour minimiser le flux de données numériques à transmettre. Cette compression est normalisée (MPEG).

Côté réception, les images sont donc généralement décompressées sous forme numérique avant d'être codées selon une norme (PAL, NTSC, SECAM) de télévision couleur et converties en signaux analogiques. Ces transformations sont généralement effectuées au sein du système de conversion.

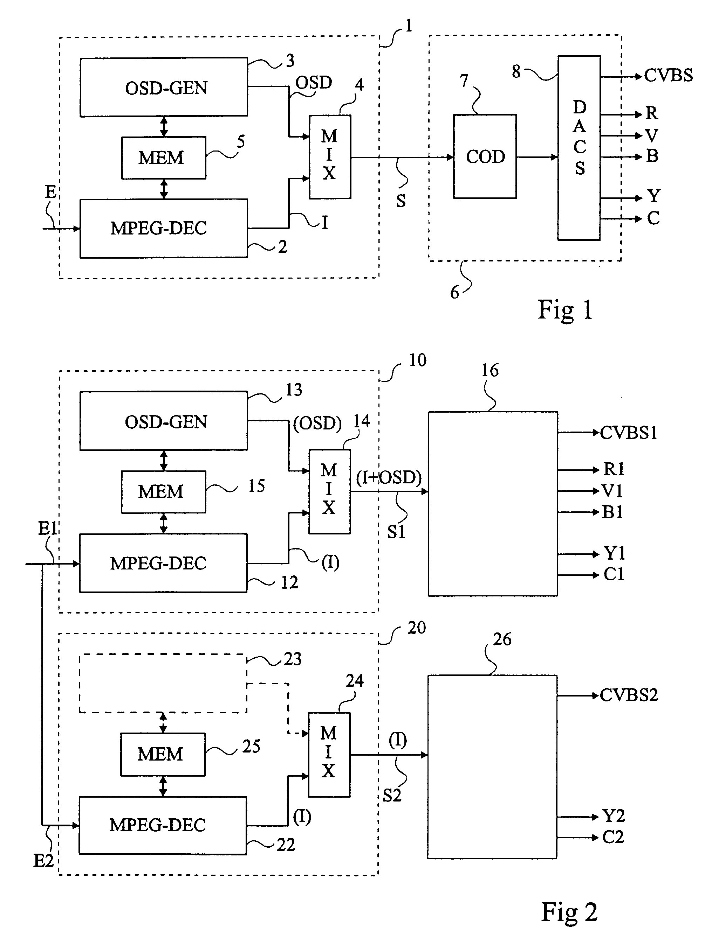

La figure 1 représente, sous forme de schéma-bloc, un exemple de système de conversion classique.

Les signaux de télévision numériques provenant d'une antenne de réception satellite (non représentée) ou d'un réseau câblé sont envoyés, après une première démodulation analogique de la fréquence de canal et une deuxième démodulation de type QAM (modulation d'amplitude en quadrature) pour le câble ou de type QPSK (modulation par saut de phase en quadrature) pour le satellite, sur une entrée E d'un module numérique 1 du système de conversion. Ce module 1 comporte essentiellement un décodeur (MPEG-DEC) 2 recevant les signaux numériques codés selon une norme MPEG et provenant de l'entrée E. Ce décodeur 2 restitue un flux numérique I de données images.

Le module 1 comporte, en outre, généralement un circuit (OSD-GEN) 3 de génération d'éléments graphiques devant être incrustés dans les images. Ces éléments graphiques correspondent généralement à des menus interactifs, appelés au moyen d'une télécommande, permettant à l'utilisateur d'effectuer des réglages de certains paramètres de fonctionnement du téléviseur et de son organe de réception. Il s'agit, par exemple, de réglages des canaux de réception, de réglages de la parabole de réception satellite, de réglages du son, du contraste, etc. Les signaux relatifs à ces éléments graphiques sont générés sous forme numérique par le circuit 3 dans un format compatible avec celui du module 1, c'est-à-dire avec le flux numérique d'images I. Ces signaux sont généralement désignés par leur appellation anglo-saxonne "On screen display", ou signaux d'OSD.

Les signaux d'OSD sont insérés dans le flux d'images I au moyen d'un mélangeur (MIX) 4 dont une sortie S délivre un flux d'images numériques résultant du mélange des images principales I fournies par le décodeur 2 et des signaux d'OSD.

Le générateur 3 et le décodeur 2 partagent généralement une même mémoire (MEM) associée au module numérique 1.

Le flux d'images numériques S est alors envoyé à un module 6 de codage de ces signaux en des signaux analogiques conformes aux normes PAL, SECAM ou NTSC de télévision couleur. Le module 6 comprend essentiellement un circuit d'encodage 7 et des convertisseurs numériques/analogiques 8 qui transposent le flux S en signaux vidéo analogiques CVBS et/ou R, V, B et/ou Y, C.

Les signaux délivrés par le module 6 sont utilisés par le téléviseur pour afficher les images.

Certains de ces signaux sont également utilisés pour enregistrer des émissions, par exemple, sur un magnétoscope.

Dans ce cas, la présence des signaux d'OSD dans le flux d'images S présente l'inconvénient que ces signaux sont alors présents sur toutes les sorties analogiques du module de conversion 6 et se retrouvent donc enregistrés sur la bande du magnétoscope.

L'enregistrement des émissions est donc perturbé par tout appel d'un menu par l'utilisateur au moyen de la télécommande. Il n'est donc pas possible de vérifier ou de modifier des réglages pendant un enregistrement.

Pour pallier cet inconvénient, on est classiquement contraint d'utiliser deux modules de décodages numériques et deux modules de codages tels que représentés en figure 1 au sein du système de conversion.

La figure 2 représente un exemple de système de conversion classique de ce type.

Ce système de conversion comporte deux modules numériques de décodage selon une norme MPEG, respectivement 10 et 20. Chaque module 10 ou 20 reçoit, en entrée, respectivement E1 ou E2, un même flux de signaux de télévision numériques. Les modules 10 et 20 présentent sensiblement la même structure que le module numérique 1 de la figure 1. Ils comportent donc, chacun, un décodeur MPEG (MPEG-DEC), respectivement 12 ou 22, un générateur de signaux d'OSD (OSD-GEN), respectivement 13 ou 23, un mélangeur (MIX), respectivement 14 ou 24, et une mémoire (MEM), respectivement 15 ou 25.

Chaque module 10 ou 20 est associé à un module de codage, respectivement 16 ou 26, destiné à convertir les flux d'images numériques, respectivement S1 et S2, délivrés par les modules 10 et 20 en des signaux vidéo analogiques normalisés. Les modules 16 et 26 ont été représentés à la figure 2 par un simple bloc. Chaque module 16 ou 26 est identique au module 6 représenté en figure 1.

Le module 10 et le module 16 sont destinés à générer des signaux vidéo analogiques comportant, le cas échéant, des signaux d'OSD insérés dans le flux I d'images principales. Le fonctionnement des modules 10 et 16 est identique au fonctionnement des modules 1 et 6 de la figure 1.

Les modules 20 et 26 sont destinés à générer des signaux vidéo analogiques dépourvus de signaux d'OSD. Le générateur 23 du module 20 n'est donc pas utilisé. De même, seules les sorties CVBS2, Y2 et C2 du module 26 sont utilisées dans la mesure où les sorties R, V et B d'un circuit de codage ne sont généralement pas utilisées pour l'enregistrement d'images vidéo sur un magnétoscope.

On dispose alors, pour les signaux CVBS, Y et C de deux formes de ces signaux, l'une (CVBS1, Y1, C1) incluant, le cas échéant, des signaux d'OSD pour l'affichage de menus interactifs sur le poste de télévision, et l'autre (CVBS2, Y2 et C2) comprenant le flux d'images principales seules.

Un inconvénient d'un système de conversion tel que représenté à la figure 2 est qu'il nécessite quatre circuits, généralement intégrés, 10, 16, 20 et 26. Le coût du système se trouve alors sensiblement doublé par rapport à un système tel que représenté en figure 1.

Le document WO-A-95/33338 décrit un système de conversion de signaux codés selon une norme MPEG en signaux normalisés, pourvu de moyens pour insérer des signaux d'images graphiques dans un flux d'images principales.

Le document WO-A-94/17633 décrit également un système de conversion de signaux de télévision codés selon une norme MPEG en signaux vidéo analogiques normalisés.

Un objet de la présente invention est de proposer une nouvelle architecture d'un système de conversion de signaux de télévision numériques en signaux analogiques normalisés de télévision, évitant la perturbation d'enregistrements vidéo éventuels par des signaux d'OSD susceptibles d'être insérés dans un flux d'images principales.

La présente invention vise également à proposer une architecture simple et peu coûteuse.

Pour atteindre ces objets, la présente invention prévoit un système de conversion de signaux de télévision numériques codés selon une norme MPEG en signaux vidéo analogiques normalisés, comprenant :
des moyens pour générer des images graphiques et pour insérer des signaux d'images correspondants dans un flux numérique décodé d'images principales ;
un module de décodage numérique recevant les signaux codés selon une norme MPEG et comportant des moyens pour délivrer un flux d'images multiplexées constitué d'un premier flux d'images principales et d'un deuxième flux d'images contenant, outre les images principales, des signaux d'images graphiques éventuels ; et
un module de codage comportant un démultiplexeur dudit flux multiplexé et deux encodeurs recevant, respectivement, les premier et deuxième flux et délivrant, chacun, un flux numérique d'images codées selon une norme de télévision couleur à des convertisseurs numériques/analogiques auxquels ils sont respectivement associés et qui délivrent lesdits signaux vidéo analogiques normalisés.

Selon un mode de réalisation de la présente invention, ledit module numérique comporte un décodeur de signaux codés selon une norme MPEG, un générateur de signaux d'images graphiques, un mélangeur recevant les signaux numériques délivrés par ledit décodeur et ledit générateur et délivrant un flux numérique d'images dans lequel les signaux d'images graphiques éventuels sont insérés dans le flux d'images principales, et un multiplexeur recevant le flux d'images principales délivré par ledit décodeur et le flux d'images délivré par ledit mélangeur.

Selon un mode de réalisation de la présente invention, ledit module de codage comporte un bloc regroupant des fonctions communes auxdits deux encodeurs.

Selon un mode de réalisation de la présente invention, ledit bloc délivre au moins des signaux d'horloge et de sous-porteuse de chrominance qui sont communs auxdits deux encodeurs.

Selon un mode de réalisation de la présente invention, les fréquences d'échantillonnage dudit multiplexeur et dudit démultiplexeur correspondent au double d'une fréquence de commande dudit mélangeur.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 et 2 qui ont été décrites précédemment sont destinées à exposer l'état de la technique et le problème posé ; et
la figure 3 représente, sous forme de schéma-bloc un mode de réalisation d'un système de conversion selon la présente invention.

Pour des raisons de clarté, seuls les éléments nécessaires à la compréhension de l'invention ont été exposés aux figures et seront décrits par la suite.

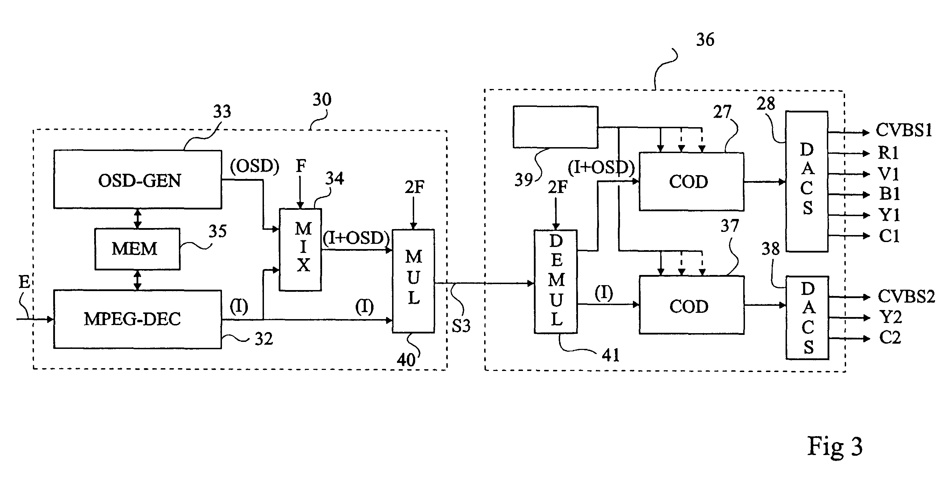

La figure 3 représente un mode de réalisation de la présente invention.

Selon l'invention, le système de conversion comporte un premier module numérique 30 recevant, sur une entrée E, des signaux de télévision numériques codés selon une norme MPEG provenant, par exemple, d'une antenne de réception satellite ou d'un réseau câblé (non représentés). Le module 30 comporte, comme le module numérique 1 de la figure 1, un décodeur MPEG (MPEG-DEC) 32, un générateur de signaux d'OSD (OSD-GEN) 33, un mélangeur (MIX) 34 et une mémoire (MEM) 35.

Selon l'invention, le module 30 comporte également un multiplexeur (MUL) 40 recevant, sur deux entrées, respectivement le flux mélangé (I+OSD) délivré par le mélangeur 34 et le flux d'images principales (I) délivré par le décodeur 32. Ainsi, la sortie du multiplexeur 40 qui constitue la sortie S3 du module 30 délivre un flux multiplexé d'images numériques contenant à la fois un flux d'images (I+OSD) dans lequel des signaux d'OSD sont, le cas échéant, insérés et le flux d'images principales seules (I) .

Un avantage du recours à un multiplexeur est que cela minimise le nombre de broches du circuit intégré.

Pour ne pas perturber le rythme de transmission des images, on veillera à ce que la fréquence d'échantillonnage du multiplexeur 40 soit égale au double de la fréquence F du mélangeur 34. Bien que la fréquence 2F d'échantillonnage du multiplexeur 40 puisse provenir d'une horloge distincte de celle fournissant la fréquence F, on préférera, selon l'invention, utiliser les deux fronts du signal d'horloge à la fréquence F pour commander le multiplexeur 40. On évite ainsi le recours à un générateur supplémentaire de signal d'horloge.

Le module 30 est associé à un module de codage 36. Ce module 36 reçoit le flux d'images multiplexées à la fréquence 2F. Selon l'invention, il comporte un démultiplexeur (DEMUL) 41 dont la fréquence d'échantillonnage est la fréquence 2F. Deux sorties du démultiplexeur 41 délivrent donc, à la fréquence F, respectivement un flux (I+OSD) d'images contenant le cas échéant des signaux d'OSD et un flux (I) d'images principales seules.

Le module 36 comporte deux encodeurs de signaux numériques selon les normes de télévision couleur PAL et/ou SECAM et/ou NTSC, respectivement 27 et 37. Les encodeurs 27 et 37 sont respectivement associés à des convertisseurs numériques/analogiques (DACS), respectivement 28 et 38. Les convertisseurs 28 délivrent des signaux vidéo analogiques CVBS1, R1, V1, B1, Y1 et C1 qui comportent, le cas échéant, des menus interactifs insérés dans les images. Ces signaux sont destinés à l'affichage sur le téléviseur. Les convertisseurs 38 délivrent des signaux vidéo analogiques CVBS2, Y2 et C2 qui ne comportent que les images principales et qui sont donc destinés, par exemple, à un magnétoscope.

Un avantage de la présente invention est qu'elle évite le recours à deux modules numériques de décodage selon une norme MPEG.

De préférence, certaines fonctions des circuits d'encodage 27 et 37 sont regroupées au sein d'un même bloc 39. En effet, les circuits 27 et 37 fonctionnent à la même fréquence F et ils peuvent donc partager, notamment, la même base de temps, le même générateur de sous-porteuse de chrominance, le même générateur d'impulsion de synchronisation, le même générateur éventuel de signaux de sous-titrage, le même système éventuel de cryptage du signal et le même circuit de décodage du bus de contrôle qui sont rassemblés dans le bloc commun 39. Cela permet d'optimiser la fonction de double encodage réalisée par le module 36 en minimisant le nombre de circuits nécessaires. Les fonctions qui doivent être présentes dans chaque circuit 27 ou 37 sont, selon l'invention, le filtrage de chrominance et de luminance, le modulateur de chrominance et le sommateur de luminance et chrominance.

Ainsi, l'invention permet de délivrer à la fois un flux d'images contenant le cas échéant des signaux d'OSD et un flux d'images principales seules sans pour autant augmenter le nombre de circuits intégrés et de connexions nécessaires par rapport à un système de conversion tel que représenté en figure 1.

Bien entendu, la présente invention est susceptible de diverses variantes et modifications qui apparaîtront à l'homme de l'art. En particulier, la réalisation pratique des modules numériques et de codage est à la portée de l'homme de l'art sur la base des indications fonctionnelles données ci-dessus.

## Revendications

1. Système de conversion de signaux de télévision numériques codés selon une norme MPEG en signaux vidéo analogiques normalisés, comprenant des moyens pour générer des images graphiques et pour insérer des signaux d'images correspondants (OSD) dans un flux numérique décodé d'images principales (I),
**caractérisé en ce qu**'il comprend :
un module de décodage numérique (30) recevant les signaux codés selon une norme MPEG et comportant des moyens pour délivrer un flux d'images multiplexées (S3) constitué d'un premier flux d'images principales (I) et d'un deuxième flux d'images (I+OSD) contenant, outre les images principales, des signaux d'images graphiques éventuels ; et
un module de codage (36) comportant un démultiplexeur (41) dudit flux multiplexé et deux encodeurs (27, 37) recevant, respectivement, les premier et deuxième flux et délivrant, chacun, un flux numérique d'images codées selon une norme de télévision couleur (PAL, NTSC, SECAM) à des convertisseurs numériques/analogiques (28, 38) auxquels ils sont respectivement associés et qui délivrent lesdits signaux vidéo analogiques normalisés.

2. Système de conversion selon la revendication 1, **caractérisé en ce que** ledit module numérique (30) comporte :
un décodeur (32) de signaux codés selon une norme MPEG ;
un générateur (33) de signaux d'images graphiques (OSD) ;
un mélangeur (34) recevant les signaux numériques délivrés par ledit décodeur (32) et ledit générateur (33) et délivrant un flux numérique d'images (I+OSD) dans lequel les signaux d'images graphiques éventuels sont insérés dans le flux d'images principales (I) ; et
un multiplexeur (40) recevant le flux d'images principales (I) délivré par ledit décodeur (32) et le flux d'images (I+OSD) délivré par ledit mélangeur (34).

3. Système de conversion selon la revendication 1 ou 2, **caractérisé en ce que** ledit module de codage (36) comporte un bloc (39) regroupant des fonctions communes auxdits deux encodeurs (27, 37).

4. Système de conversion selon la revendication 3, **caractérisé en ce que** ledit bloc (39) délivre au moins des signaux d'horloge et de sous-porteuse de chrominance qui sont communs auxdits deux encodeurs (27, 37).

5. Circuit de conversion selon l'une quelconque des revendications 2 à 4, **caractérisé en ce que** les fréquences d'échantillonnage (2F) dudit multiplexeur (40) et dudit démultiplexeur (41) correspondent au double d'une fréquence (F) de commande dudit mélangeur (34).

## Patentansprüche

1. Ein System zum Umwandeln digitaler Fernsehsignale, die gemäß einem MPEG-Standard in standardisierte analoge Videosignale codiert sind, das Mittel umfaßt zum Erzeugen von graphischen Bildern und zum Eingeben entsprechender Bildsignale (OSD) in einen decodierten digitalen Strom von Hauptbildern (I),
**dadurch gekennzeichnet**, daß es folgendes umfaßt:
eine digitale Decodierungseinheit (30), die die gemäß einem MPEG-Standard codierten Signale empfängt und Mittel umfaßt zum Ausgeben eines Stroms von gemultiplexten Bildern (S3), der aus einem ersten Strom von Hauptbildern (I) und aus einem zweiten Strom von Bildern (I+OSD) besteht, der, zusätzlich zu den Hauptbildern, mögliche graphische Bildsignale enthält; und
eine Codierungseinheit (36), die einen Demultiplexer (41) des gemultiplexten Stroms und zwei Codierer (27, 37) umfaßt, die entsprechend die ersten und zweiten Ströme empfangen und die jeder einen digitalen Strom von Bildern, die gemäß einem Farbfernsehstandard (PAL, NTSC, SECAM) codiert sind, an digital-zu-analog-Umwandler (28, 38) abgeben, die entsprechend zugeordnet sind und die die standardisierten analogen Videosignale abgeben.

2. Ein Umwandlungssystem gemäß Anspruch 1, **dadurch gekennzeichnet**, daß die Digitaleinheit (30) folgendes umfaßt:
einen Decoder (32) von gemäß einem MPEG-Standard codierten Signalen;
einen Generator (33) von graphischen Bildsignalen (OSD);
einen Mischer (34), der die von dem Decoder (32) und dem Generator (33) abgegebenen digitalen Signale empfängt und einen digitalen Strom von Bildern (I+OSD) abgibt, in dem die möglichen graphischen Bildsignale in den Strom der Hauptbildern (I) eingespeist werden; und
einen Multiplexer (40), der den Strom von von dem Decoder (32) abgegebenen Hauptbildern (I) und den Strom von von dem Mischer (34) abgegebenen Bildern (I+OSD) empfängt.

3. Ein Umwandlungssystem gemäß Anspruch 1 oder 2, **dadurch gekennzeichnet**, daß die Codierungseinheit (36) einen Block (39) umfaßt, der Funktionen gruppiert, die den beiden Codierern (27, 37) gemeinsam sind.

4. Ein Umwandlungssystem gemäß Anspruch 3, **dadurch gekennzeichnet**, daß der Block (39) zumindest zwei Takt- bzw. Clock- und Chrominanz-Subträgersignale abgibt, die den beiden Codierern (27, 37) gemeinsam sind.

5. Ein Umwandlungssystem gemäß einem der Ansprüche 2 bis 4, **dadurch gekennzeichnet**, daß die Tast- bzw. Samplefrequenzen (2F) des Multiplexers (40) und des Demultiplexers (41) dem Doppelten einer Steuerfrequenz (F) des Mischers (34) entsprechen.

## Claims

1. A system for converting digital television signals coded according to an MPEG standard into standardized analog video signals, including means for generating graphic images and for inserting corresponding image signals (OSD) in a decoded digital flow of main images (I),
**characterized in that** it includes:
a digital decoding unit (30) receiving the signals coded according to an MPEG standard and including means for issuing a flow of multiplexed images (S3) comprised of a first flow of main images (I) and of a second flow of images (I+OSD) containing, in addition to the main images, possible graphic image signals; and
a coding unit (36) including a demultiplexer (41) of the multiplexed flow and two encoders (27, 37) receiving, respectively, the first and second flows and each issuing a digital flow of images coded according to a color television standard (PAL, NTSC, SECAM) to digital-to-analog converters (28, 38) respectively associated therewith and which issue the standardized analog video signals.

2. A conversion system according to claim 1, **characterized in that** the digital unit (30) includes:
a decoder (32) of signals coded according to an MPEG standard;
a generator (33) of graphic image signals (OSD);
a mixer (34) receiving the digital signals issued by the decoder (32) and the generator (33) and issuing a digital flow of images (I+OSD) in which the possible graphic image signals are inserted in the flow of main images (I); and
a multiplexer (40) receiving the flow of main images (I) issued by the decoder (32) and the flow of images (I+OSD) issued by the mixer (34).

3. A conversion system according to claim 1 or 2, **characterized in that** the coding unit (36) includes a block (39) grouping functions which are common to the two encoders (27, 37).

4. A conversion system according to claim 3, **characterized in that** the block (39) issues at least two clock and chrominance subcarrier signals which are common to the two encoders (27, 37).

5. A conversion system according to any of claims 2 to 4, **characterized in that** the sampling frequencies (2F) of the multiplexer (40) and of the demultiplexer (41) correspond to double a control frequency (F) of the mixer (34).
